# EUROPEAN PATENT SPECIFICATION

(11) **EP 0 422 950 B1**
(45) Date of publication and mention of the grant of the patent: **31.08.1994**
(21) Application number: 90311188.8
(22) Date of filing: 12.10.1990
(51) Int. Cl.: G21C 19/307, G21C 3/32

(54) **Nuclear fuel assembly with debris filter**
Kernbrennstabbündel mit Trümmerfänger
Assemblage de combustible nucléaire ayant un filtre de debris

(30) Priority: 13.10.1989 US 421042
(43) Date of publication of application: 17.04.1991
(73) Proprietor: B&W FUEL COMPANY, Lynchburg, Virginia (US)
(72) Inventor: Riordan, John E. III, Lynchburg, Virginia 24503 (US)
(74) Representative: Cotter, Ivan John

(56) References cited:
- EP-A- 0 289 829
- EP-A- 0 392 921
- FR-A- 2 171 279
- FR-A- 2 500 947

## Description

This invention relates to nuclear reactor fuel assemblies and in particular to debris filters used in such assemblies.

Commercial nuclear reactors include multiple fuel assemblies. Each fuel assembly comprises a number of fuel rods radially spaced apart in a parallel array by grid assemblies spaced along the length of the fuel rods. Each grid assembly is formed in an egg-crate design by multiple metal strips that criss-cross at right angles to form individual cells for each of the fuel rods. The strips are provided with tabs that project into the cells against the fuel rods. The tabs serve the purposes of holding the fuel rods in their respective radial positions and providing maximum surface area contact of the fuel rods with coolant flowing through the cells. Control rod guide thimble tubes also extend through selected cells in the grid assembly and are attached at their upper and lower ends respectively to an upper end fitting and a lower end fitting. The upper and lower end fittings are also commonly referred to in the industry as nozzle plates since they are rigid plates that provide structural integrity and load bearing support to the fuel assembly and are provided with flow apertures therethrough for coolant flow. The lower end fitting or nozzle plate is positioned directly above openings in the lower portion of the reactor where coolant flows up into the reactor to the core. The ligaments between apertures in the end fittings coincide with the ends of the fuel rods and limit upward or downward movement of the fuel rods.

Debris such as metal particles, chips, and turnings is generated during manufacture, installation, and repair of the reactor, piping, and associated cooling equipment. The size and complexities of the equipment prevent location and removal of all such debris before operations are commenced. Also, some of this debris may not become loose matter in the system until the system is put into operation. It has been recognised that this debris presents a greater problem to the system than previously thought. These small pieces of debris have been found to lodge between the walls of the grid cells and the fuel elements. Movement and vibration of the lodged debris caused by coolant flow results in abrasion and removal of cladding on the fuel rods. This in turn leads to detrimental effects such as corrosion of the fuel rods and failure to retain radioactive fission gas products. Such damage, although not critical to safety of the surrounding environment, can reduce operating efficiency by the need to suspend operation while replacing damaged fuel rods. It can be seen that a need exists for a debris filter capable of filtering debris of a size which may lodge between the grid cell walls and the fuel rods. An important consideration besides that of filtration is that a substantial coolant pressure drop across the filter must be avoided in order to maintain an adequate coolant flow over the fuel rods for heat removal therefrom. Previously proposed disclosures of approaches to solving this problem include the following.

US Patents US-A-4 684 495 and US-A-4 684 496 disclose debris traps formed from a plurality of straps aligned with one another in a criss-cross arrangement and defining a plurality of interconnected wall portions which form a multiplicity of small cells each having open opposite ends and a central channel for coolant flow through the trap.

US-A-4 828 791 discloses a debris resistant bottom nozzle which is a substantially solid plate having cut-out regions in alignment with inlet flow holes in the lower core plate. Separate criss-cross structures fixed to the plate extend across the cut-out regions to act as a debris trap.

US-A-4 664 880 and US-A-4 678 627 disclose debris traps mounted within a bottom nozzle that define a hollow enclosure with an opening so as to form a debris capturing and retaining chamber.

US-A-4 652 425 discloses a trap for catching debris disposed between the bottom nozzle and the bottom grid. The structure forms multiple hollow cells that receive the fuel rod lower end plugs with dimples in each cell for catching debris carried into the cells by the coolant flow.

European Patent Application Publication EP-A-0 289 829 discloses a nuclear fuel assembly having a nuclear fuel assembly having a plurality of fuel rods held in a spaced array by grid assemblies, guide tubes extending through the grid assemblies and attached at their upper and lower ends to an upper end fitting and a lower end fitting, the end fittings having openings therethrough for coolant flow, and a debris filter, the debris filter comprising a plate attached to the top of the lower end fitting and having a plurality of flow holes therethrough. The flow holes are circular and have a diameter of less than 5mm.

According to a first aspect of the invention there is provided a nuclear fuel assembly having a plurality of fuel rods held in a spaced array by grid assemblies, guide tubes extending through the grid assemblies and attached at their upper and lower ends to an upper end fitting and a lower end fitting, the end fittings having openings therethrough for coolant flow, and a debris filter, the debris filter comprising a plate attached to the lower end fitting and having a plurality of flow holes therethrough, characterised in that: the plate is attached to the bottom of the lower end fitting; the flow holes are substantially triangularly-shaped; each of the triangularly-shaped flow holes measures approximately 4.6mm (0.181 inches) from base to apex; and the majority of the triangularly-shaped flow holes are arranged in groups of four to define square clusters that each measure approximately 10.3mm (0.405 inches) on each side with the ligaments of the plate between the flow holes in each cluster being diagonally oriented relative to sides of the plate.

According to a second aspect of the invention there is provided a nuclear fuel assembly having a plurality of fuel rods held in a spaced array by grid assemblies, guide tubes extending through the grid assemblies and attached at their upper and lower ends to an upper end fitting and a lower end fitting, the end fittings having openings therethrough for coolant flow, and a debris filter, the debris filter comprising a plate attached to the top of the lower end fitting and having a plurality of flow holes therethrough, characterised in that the flow holes are substantially sector-shaped; each of the sector-shaped flow holes measures approximately 4.6mm (0.181 inches) in diameter; and the majority of the sector-shaped flow holes (44) are arranged in groups of four to define circular clusters that each measure approximately 10.3mm (0.405 inches) in diameter with the ligaments of the plate between the flow holes in each cluster being diagonally oriented relative to sides of the plate.

Preferred embodiments of the invention described in detail below seek to provide a solution to the above problem by providing a debris filter in the form of a screen attached to the lower end fitting or nozzle plate. The lower end fitting is formed from a substantially square base having interconnecting ribs between the walls with openings thereon which receive control rod guide tubes. Legs extending downwardly from each corner support the end fitting on the lower reactor internals. The screen, which is sized to match the lower end fitting, is in the form of a plate which is stamped to provide flow holes sized to filter debris, and is attached to the lower end fitting.

The invention will now be further described, by way of illustrative and non-limiting example, with reference to the accompanying drawings, in which like parts are described by like reference numerals, and in which:
Figure 1 is a partial sectional view of a typical nuclear reactor fuel assembly;
Figure 2 is a side view of a debris filter installed on a lower end fitting of the fuel assembly to form a fuel assembly embodying the invention;
Figure 3 is a bottom view of the debris filter in its installed position on the lower end fitting;
Figure 4 is a top view of the lower end fitting;
Figure 5 is a top view of the debris filter; and
Figures 6 to 11 illustrate an alternative embodiment of the invention.

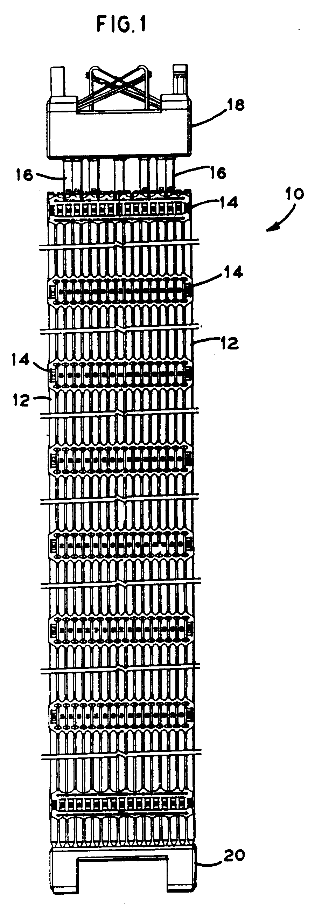

Figure 1 of the drawings shows a typical nuclear fuel assembly 10. The fuel assembly 10 is typical of that used in a pressurised water reactor and comprises a plurality of fuel rods 12, grid assemblies 14, guide tubes 16, an upper end fitting 18, and a lower end fitting 20. The fuel rods 12 are maintained in a spaced apart array by the grid assemblies tin. The guide tubes 16 extend through the grid assemblies 14 and are attached to the end fittings 18, 20 and, in addition to providing structural integrity to the entire assembly, also serve as guides for control rods (not shown). The upper and lower end fittings 18, 20 provide structural and load bearing support to the fuel assembly 10 and are also provided with openings therethrough to allow coolant to flow vertically through the fuel assembly 10. The lower end fitting 20 rests on a lower core support plate (not shown) of the reactor and directly above coolant inlet openings in the core support plate that direct coolant upwardly to the fuel assembly. Dimples or tabs in the walls of the grid assemblies 14 allow maximum surface area contact of the fuel rods 12 with the coolant as it flows upwardly therethrough.

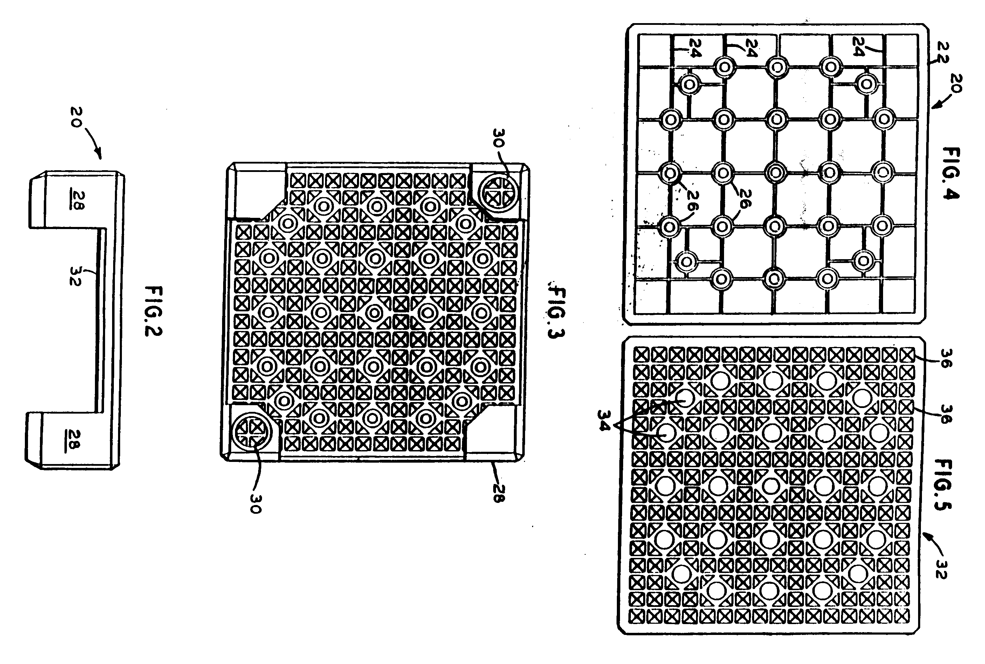

The lower end fitting 20, shown in Figure 4, is formed from a substantially square base 22 having four side walls. Between the side walls, a plurality of ribs 24 are provided that interconnect, leaving the interior of the base 22 substantially open to allow coolant flow therethrough. A plurality of guide tube bosses 26 are provided along the ribs 24 in a pattern matching the distribution of the guide tubes 16 in the grid assemblies 14. Legs 28, seen in Figure 2 and 3, may be separate parts attached to the base 22 or may be integral therewith. Openings 30 provided on two diagonally disposed legs 28 are used to attach the lower end fitting 20 to the lower core plate to prevent movement of the end fitting 20 and the fuel assembly 10 during reactor operations.

A debris filter 32, seen separately in Figure 5 and attached to the lower end fitting 20 in Figure 2 and 3, is formed from a stamped plate in the preferred embodiment for ease of manufacturing and is approximately 2.54mm (0.1 inches) thick. The plate is stamped so as to have guide tube openings 34 in a pattern matching the guide tube bosses 26 on the lower end fitting 20. Triangularly shaped flow holes 36 are provided in a square pattern or cluster wherein the solid portions of the plate between each cluster are substantially aligned with the ends of the fuel rods 12. This provides support to the fuel rods 20 when necessary due to movement and allows maximum coolant flow through the flow holes 36, the grid assemblies 14, and around the fuel rods 20. In the preferred embodiment, each square cluster measures 10.3mm (0.405 inches) on each side with the distance from the base of each triangular flow hole 36 to its apex adjacent the centre of the square cluster being 4.6mm (0.181 inches). This provides a total flow area through the debris filter 32 of approximately 174cm² (27 square inches). In the preferred embodiment, the portions of the plate or ligaments between the flow holes 36 in each square cluster is approximately 0.76mm (0.030 inches) in width so as to provide adequate support in preventing failure of the debris filter 32 during operations. The ligaments of the plate between the flow holes in each cluster are diagonally oriented relative to the sides of the plate. The diagonal orientation of the filter ligaments is such that the unblocked flow area, when considering the projected area of the fuel rods and the filter flow holes, is maximised. This minimises pressure drop. As best seen in Figure 3, the ribs 24 in the lower end fitting 20 and the solid portions of the debris filter 32 between the flow holes 36 are arranged in identical configurations so that the ribs 24 do not interfere with coolant flow after passing through the debris filter 32. The debris filter 32 may be attached to the lower end fitting 20 by any suitable means such as welding.

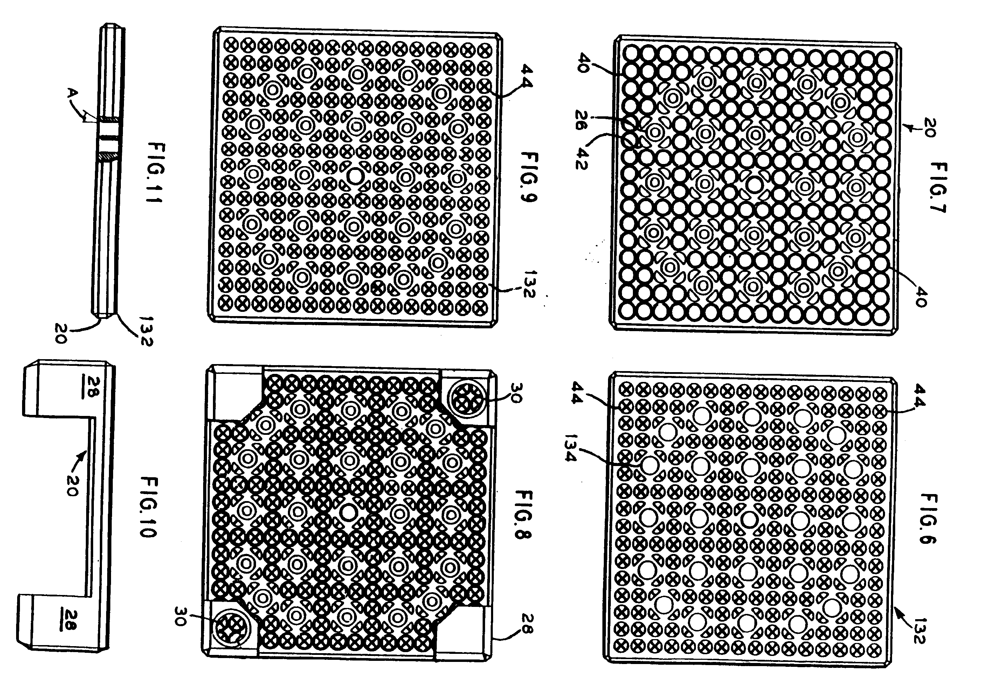

An alternative embodiment of the invention is illustrated in Figures 6 to 11. In the alternative embodiment, instead of having ribs 24 bearing guide tube bosses 26, the lower end fitting 20 is formed from a plate provided with a plurality of flow holes 40. The solid portions of the plate between each cluster of flow holes 40 are substantially aligned with the ends of the fuel rods 12. As seen in the bottom view of Figure 7 and the partial side sectional view of Figure 11, the flow holes 40 are provided with a bottom chamfer as indicated by the letter A of approximately 20 degrees. Positioned around the guide tube bosses 26 are semi-circular flow holes 42 to provide the maximum flow area possible. The inner diameter of the flow holes 40 is approximately 10.3mm (0.405 inches) while the chamfered lower edge is approximately 12.6mm (0.495 inches) in diameter. As seen in the bottom and side views of Figures 8 and 10, the legs 28 are provided with openings 30 as described above.

A debris filter 132, seen in top view in Figure 6, is also formed from a stamped plate approximately 2.54mm (0.1 inches) thick and is provided with a plurality of flow holes 44. The flow holes 44 are substantially pie-shaped sector-shaped and arranged in circular clusters of four and in semi-circular clusters of two around guide tube openings 134 in a pattern matching that of the flow holes 40 in the lower end fitting 20 (illustrated in Figure 8). The portions of the plate or ligaments between the flow holes 44 in each circular cluster are approximately 0.76mm (0.030 inches) in width. This results in each pie-shaped quadrant having a diameter of approximately 4.6mm (0.181 inches) with the circular cluster having a diameter equal to that of the flow holes 40. The ligaments of the plate between the flow holes 44 in each cluster are diagonally oriented relative to the sides of the plate. The diagonal orientation of the filter ligaments is such that the unblocked flow area, when considering the projected area of the fuel rods and the filter flow holes, is maximised. This minimises pressure drop. The total flow area provided by the debris filter 132 is thus approximately 142cm² (22 square inches). As seen in Figure 10, the debris filter 132 is attached to the top of the lower end fitting 20 by any suitable means such as welding. Figure 9 is a top view of the debris filter 132 as it appears attached to the lower end fitting 20.

## Claims

1. A nuclear fuel assembly (10) having a plurality of fuel rods (12) held in a spaced array by grid assemblies (14), guide tubes (16) extending through the grid assemblies (14) and attached at their upper and lower ends to an upper end fitting (18) and a lower end fitting (20), the end fittings having openings therethrough for coolant flow, and a debris filter (32), the debris filter (32) comprising a plate attached to the lower end fitting (20) and having a plurality of flow holes (36) therethrough, characterised in that: the plate is attached to the bottom of the lower end fitting (20); the flow holes (36) are substantially triangularly-shaped; each of the triangularly-shaped flow holes (36) measures approximately 4.6mm (0.181 inches) from base to apex; and the majority of the triangularly-shaped flow holes (36) are arranged in groups of four to define square clusters that each measure approximately 10.3mm (0.405 inches) on each side with the ligaments of the plate between the flow holes (36) in each cluster being diagonally oriented relative to sides of the plate.

2. A nuclear fuel assembly (10) having a plurality of fuel rods (12) held in a spaced array by grid assemblies (14), guide tubes (16) extending through the grid assemblies (14) and attached at their upper and lower ends to an upper end fitting (18) and a lower end fitting (20), the end fittings having openings therethrough for coolant flow, and a debris filter (132), the debris filter (132) comprising a plate attached to the top of the lower end fitting (20) and having a plurality of flow holes (44) therethrough, characterised in that the flow holes (44) are substantially sector-shaped; each of the sector-shaped flow holes (44) measures approximately 4.6mm (0.181 inches) in diameter; and the majority of the sector-shaped flow holes (44) are arranged in groups of four to define circular clusters that each measure approximately 10.3mm (0.405 inches) in diameter with the ligaments of the plate between the flow holes (44) in each cluster being diagonally oriented relative to sides of the plate.

## Patentansprüche

1. Kernbrennstabbündel (10) mit einer Vielzahl von Brennstäben (12), die durch Gitteraufbauten (14) in einer in Abständen verteilten Anordnung gehalten werden, Führungsröhren (16), die sich durch die Gitteraufbauten (14) erstrecken und an ihren oberen und unteren Enden mit einem oberen Endanschlußstück (18) und einem unteren Endanschlußstück (20) verbunden sind, wobei die Endanschlußstücke Öffnungen für den Kühlmitteldurchfluß besitzen, und einem Trümmerfänger (32), wobei der Trümmerfänger (32) eine Platte umfaßt, die mit dem unteren Endanschlußstück (20) verbunden ist und eine Vielzahl von Durchflußöffnungen (36) besitzt, dadurch gekennzeichnet, daß die Platte mit dem Boden des unteren Endanschlußstückes (20) verbunden ist, die Durchflußöffnungen (36) im wesentlichen dreieckig geformt sind, jede der dreieckig geformten Durchflußöffnungen (36) von der Basis zum Scheitelpunkt etwa 4,6mm (0,181 Inch) mißt und die Mehrzahl der dreieckig geformten Durchflußöffnungen (36) in Vierergruppen angeordnet ist, die quadratische Bündel definieren, die jeweils aufjeder Seite etwa 10,3mm (0,405 Inch) messen, wobei die Ligamente der Platte zwischen den Durchflußöffnungen (36) in jedem Bündel in Bezug auf die Seiten der Platte diagonal ausgerichtet sind.

2. Kernbrennstabbündel (10) mit einer Vielzahl von Brennstäben (12), die durch Gitteraufbauten (14) in einer in Abständen verteilten Anordnung gehalten werden, Führungsröhren (16), die sich durch die Gitteraufbauten (14) erstrecken und an ihren oberen und unteren Enden mit einem oberen Endanschlußstück (18) und einem unteren Endanschlußstück (20) verbunden sind, wobei die Endanschlußstücke Öffnungen für den Kühlmitteldurchfluß besitzen, und einem Trümmerfänger (132), wobei der Trümmerfänger (132) eine Platte umfaßt, die mit der Oberseite des unteren Endanschlußstückes (20) verbunden ist und eine Vielzahl von Durchflußöffnungen (44) besitzt, dadurch gekennzeichnet, daß die Durchflußöffnungen (44) im wesentlichen bogenförmig sind, jede der bogenförmigen Durchflußöffnungen (44) im Durchmesser etwa 4,6mm (0,181 Inch) mißt und die Mehrzahl der bogenförmigen Durchflußöffnungen (44) in Vierergruppen angeordnet ist, um kreisförmige Bündel zu definieren, die einen Durchmesser von jeweils etwa 10,3mm (0,405 Inch) besitzen, wobei die Ligamente der Platte zwischen den Durchflußöffnungen (44) in jedem Bündel in Bezug auf die Seiten der Platte diagonal ausgerichtet sind.

## Revendications

1. Assemblage combustible nucléaire (10) ayant une série de barres de combustible (12) maintenues selon un réseau espacé par des assemblages de grilles (14), des tubes de guidage (16) s'étendant à travers les assemblages de grilles (14) et étant fixés à leurs extrémités supérieures et inférieures à une armature terminale supérieure (18) et à une armature terminale inférieure (20), les armatures terminales ayant des ouvertures qui les traversent pour le flux de réfrigérant, et un filtre à débris (32) comprenant une plaque fixée à l'armature terminale inférieure (20) et ayant une série d'orifices d'écoulement (36) qui la traversent, caractérisé en ce que la plaque est fixée au fond de l'armature terminale inférieure (20), en ce que les orifices d'écoulement (36) ont une forme sensiblement triangulaire, en ce que chacun des orifices d'écoulement de forme triangulaire (36) mesure approximativement 4,6 mm (0,181 pouce) de la base au sommet, et en ce que la majorité des orifices d'écoulement de forme triangulaire (36) sont agencés en groupes de quatre pour définir des groupes carrés qui mesurent chacun environ 10,3 mm (0,405 pouce) de côté, les ligaments de la plaque entre les orifices d'écoulement (36) de chaque groupe étant orientés en diagonale par rapport aux côtés de la plaque.

2. Assemblage combustible nucléaire (10) ayant une série de barres de combustible (12) maintenues selon un réseau espacé par des assemblages de grilles (14), des tubes de guidage (16) s'étendant à travers les assemblages de grilles (14) et étant fixés à leurs extrémités supérieures et inférieures à une armature terminale supérieure (18) et à une armature terminale inférieure (20), les armatures terminales ayant des ouvertures qui les traversent pour le flux de réfrigérant, et un filtre à débris (132) comprenant une plaque fixée au sommet de l'armature terminale inférieure (20) et ayant une série d'orifices d'écoulement (44) qui la traversent, caractérisé en ce que les orifices d'écoulement (44) ont une forme sensiblement en secteur, en ce que chacun des orifices d'écoulement (44) en forme de secteur mesure environ 4,6 mm (0,181 pouce) de diamètre, et en ce que la majorité des orifices d'écoulement en forme de secteur (44) sont fixés par groupes de quatre pour définir des groupes circulaires qui mesurent chacun environ 10,3 mm (0,405 pouce) de diamètre, les ligaments de la plaque entre les orifices d'écoulement (44) de chaque groupe étant orientés en diagonale par rapport aux côtés de la plaque.
